(19) Europäisches Patentamt
European Patent Office
Office européen des brevets

(11) **EP 3 128 193 B1**

(12) **EUROPEAN PATENT SPECIFICATION**

(45) Date of publication and mention
of the grant of the patent:
**26.10.2022 Bulletin 2022/43**

(21) Application number: **15765601.8**

(22) Date of filing: **19.03.2015**

(51) International Patent Classification (IPC):
*F16C 33/64* (2006.01)    *F16C 33/62* (2006.01)
*B22F 5/10* (2006.01)    *C21D 1/18* (2006.01)
*C21D 8/00* (2006.01)    *C21D 9/40* (2006.01)
*C22C 33/02* (2006.01)    *C22C 38/00* (2006.01)
*C22C 38/08* (2006.01)    *C22C 38/12* (2006.01)
*F16C 33/78* (2006.01)    *F16C 19/06* (2006.01)

(52) Cooperative Patent Classification (CPC):
(C-Sets available)
**F16C 33/64; B22F 5/106; C21D 1/18; C21D 8/005;**
**C21D 9/40; C22C 33/02; C22C 38/00; C22C 38/08;**
**C22C 38/12; F16C 19/06; F16C 33/62;**
**F16C 33/7856;** B22F 2998/10         (Cont.)

(86) International application number:
**PCT/JP2015/058368**

(87) International publication number:
**WO 2015/141807 (24.09.2015 Gazette 2015/38)**

(54) **BEARING RING AND ROLLER BEARING HAVING SAID BEARING RING**

LAGERRING UND WÄLZLAGER MIT BESAGTEM LAGERRING

BAGUE DE ROULEMENT ET ROULEMENT À ROULEAUX AYANT LADITE BAGUE DE ROULEMENT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **20.03.2014 JP 2014058001**

(43) Date of publication of application:
**08.02.2017 Bulletin 2017/06**

(73) Proprietor: **NTN Corporation**
**Osaka-shi, Osaka 550-0003 (JP)**

(72) Inventors:
• **YASHIRO Naoki**
**Kuwana-shi**
**Mie 511-0867 (JP)**
• **ITOU Yuuta**
**Kuwana-shi**
**Mie 511-0867 (JP)**
• **OKUNO Takahiro**
**Kuwana-shi**
**Mie 511-0867 (JP)**
• **OOHIRA Kouya**
**Kuwana-shi**
**Mie 511-0867 (JP)**

(74) Representative: **Eder Schieschke & Partner mbB**
**Patentanwälte**
**Elisabethstraße 34**
**80796 München (DE)**

(56) References cited:
**JP-A- H05 263 181      JP-A- H06 145 845**
**JP-A- 2002 294 388      JP-A- 2006 503 982**
**JP-A- 2012 127 492      JP-A- 2013 053 358**
**US-A1- 2004 081 576      US-A1- 2012 180 589**
**US-A1- 2013 298 691**

(52) Cooperative Patent Classification (CPC): (Cont.)

C-Sets
B22F 2998/10, B22F 3/02, B22F 3/10, B22F 3/16

## EP 3 128 193 B1

**Description**

Technical Field

The present invention relates to a raceway ring and a rolling bearing including the raceway ring.

Background Art

A raceway ring (e.g., an inner ring or an outer ring), which being a constituent member of a rolling bearing, has a raceway surface on which a rolling element, such as a ball or a roller, rolls. This type of a raceway ring is generally finished as a final product through the step of obtaining an intermediate processed product having a substantially finished product shape by subjecting a solid metal material (ingot material) to machine processing such as cutting or plastic working such as forging, the heat treatment step of subjecting the intermediate processed product to heat treatment such as hardening, the finishing step of subjecting, in particular, a part required to have high accuracy to finish processing such as grinding or polishing, and the like.

When machine processing is selected in order to obtain an intermediate processed product in an existing manufacturing method for a raceway ring, there is an advantage in that an intermediate processed product with high accuracy can be obtained, but it is difficult to enhance a yield due to a large material loss caused by a large processing amount. Further, the large processing amount and the necessity to frequently replace a processing tool are liable to extend a downtime, with the result that there is a problem in that manufacturing efficiency cannot be increased effectively. The tendency of those problems increases more as the raceway ring has a more complicated shape. Meanwhile, when plastic working is selected in order to obtain an intermediate processed product, there is an advantage in that a material loss in the manufacturing stage of the intermediate processed product can be reduced, but it is difficult to ensure processing accuracy as compared to machine processing, with the result that elaborate and drastic finish processing is required. Therefore, labor and cost are required for the finish processing, and in the current circumstances, the effect of reducing a material loss cannot be obtained as expected.

As described above, when a raceway ring is obtained from an ingot material, there is a limitation on the reduction in cost of a rolling bearing as well as the raceway ring for each of the above-mentioned reasons. In view of the foregoing, for example, as described in Patent Literatures 1 to 3, there has been proposed that an inner ring or an outer ring serving as a raceway ring is formed with a sintered metal (metal sintered compact).

In Patent Literature 1, there is disclosed that gas-atomized high-speed tool steel powder is sintered by a cold isostatic pressing (CIP) method and a hot extrusion method, or a hot isostatic pressing (HIP) method, to thereby manufacture a raceway ring or a rolling element having a maximum pore diameter converted into a perfect circle of 3 μm or less, a maximum carbide diameter converted into a perfect circle of 12 μm or less, and a hardness HRC of more than 64 and less than 69.

In Patent Literature 2, there is disclosed a bearing component obtained by sintering gas-atomized steel powder having a predetermined composition containing a large amount of chromium by the HIP method.

In Patent Literature 3, there is described a raceway ring for a bearing in which a raceway surface is formed on a sintered compact through plastic working, to thereby set the relative density to 80% or more and less than 100%.

Patent Literature 4 relates to a power transmission part made of a sintered material obtained by press molding and firing granulated powder obtained by granulating raw material powder having iron as a main component.

Patent Literature 5 relates to a titanium(Ti)-added, high strength steel as a steel for machine construction, comprising, by weight, titanium: not less than 500 ppm, the content of nitrogen (N) being N<100 ppm.

Patent Literature 6 relates to a part fatigue fracture evaluating apparatus, a part fatigue fracture evaluating method, and a computer program and, particularly to, those that are preferably used to evaluate fatigue inside a machine part subj ected to a repeated load.

Citation List

Patent Literature 1: JP 2876715 B2
Patent Literature 2: JP 2012-533688 A
Patent Literature 3: JP 2012-127492 A
Patent Literature 4: US 2012180589 A1
Patent Literature 5: US 2004081576 A1
Patent Literature 6: US 2013298691 A1

Summary of Invention

Technical Problem

However, the high-speed tool steel powder used in Patent Literature 1 is steel powder containing a large amount of chromium, tungsten, molybdenum, vanadium, and the like, and hence is expensive. The powder used in Patent Literature 2 is special powder that is also difficult to obtain, and hence the same problem occurs . Further, any of the powder is gas-atomized completely alloyed steel powder, and hence has low compressibility. Therefore, there is no choice but to use a sintering step having low mass-productivity, such as HIPorCIP, inorderto achieve high density. In view of the foregoing, the raceway ring and the rolling bearing disclosed in Patent Literatures 1 and 2 have a problem in that a manufacturing cost increases.

Further, in Patent Literature 3, there is described that the relative density of the raceway ring is increased so as to ensure mechanical strength, but there is a risk in that coarse pores may be formed in the vicinity of the raceway surface even when the entire raceway ring has high density. In this case, there is a risk in that peeling of the raceway surface originated from the coarse pores may occur, and hence the rolling fatigue life of the raceway ring is insufficient.

It is an object of the present invention to provide a raceway ring for a rolling bearing that has an increased rolling fatigue life at low cost and a rolling bearing using the raceway ring.

Solution to Problem

According to one embodiment of the present invention, there is provided a raceway ring for a bearing, comprising a raceway surface on which a rolling element rolls, the raceway surface being formed by subjecting a sintered metal material to plastic working, wherein the sintered metal material is formed by subj ecting Fe-Ni-Mo based partially diffusion-alloyed steel powder to compression molding, followed by sintering, wherein the partially diffusion-alloyed steel powder consists of 0.5 wt% to 5 wt% of Ni and 0.5wt% to 3wt% of Mo, and a balance of Fe and inevitable impurities, the partially diffusion-alloyed steel powder is powder in which Ni is diffused on and joined to a periphery of Fe-Mo alloy, and with a risk volume being adopted as a prediction volume, a square root $\sqrt{area}_{max}$ of a maximum pore envelope area estimated through use of extremal statistics to be present in the prediction volume is less than 50 $\mu$m (preferably less than 40 $\mu$m, more preferably less than 30 $\mu$m), wherein the risk volume = (Contact ellipse long diameter) x (Circumferential length of raceway surface) x (Depth at which 90% of maximum shear stress is applied), wherein the square root $\sqrt{area}_{max}$ of the estimated maximum pore envelope area is obtained through the steps (1) to (12) of patent claim 1.

Further, according to one embodiment of the present invention, there is provided a raceway ring for a bearing, comprising a raceway surface on which a rolling element rolls, the raceway surface being formed by subjecting a sintered metal material to plastic working, wherein the sintered metal material is formed by subjecting Fe-Ni-Mo based partially diffusion-alloyed steel powder to compression molding, followed by sintering, wherein the partially diffusion-alloyed steel powder consists of 0.5 wt% to 5 wt% of Ni and 0.5 wt% to 3 wt% of Mo, and a balance of Fe and inevitable impurities, the partially diffusion-alloyed steel powder is powder in which Ni is diffused on and joined to a periphery of Fe-Mo alloy, and with a region extending to a depth at which a maximum shear stress is applied within a range of an axial width of a contact ellipse generated on the raceway surface being adopted as a prediction volume, a square root $\sqrt{area}_{max}$ of a maximum pore envelope area estimated through use of extremal statistics to be present in the prediction volume is less than 50 $\mu$m (preferably less than 40 $\mu$m, more preferably less than 30 $\mu$m), wherein the square root $\sqrt{area}_{max}$ of the estimated maximum pore envelope area is obtained through the steps (1) to (12) of patent claim 2.

According to the above-mentioned configurations, coarse pores are not formed in a sintered body on the periphery of the raceway surface. Therefore, damages such as flaking originated from the coarse pores can be prevented from occurring in the raceway ring, and a rolling fatigue life comparable to that of an ingot material can be obtained.

Further, when Fe-Ni-Mo-based powder is used as the partially diffusion-alloyed steel powder, the powder is soft and hence is highly densified during compression molding. Thus, in addition to the densifying action through plastic working, the formation of the coarse pores on the periphery of the raceway surface can also be avoided. Further, the formability at a time of forming the raceway surface and the like through plastic working also becomes satisfactory.

When water-atomized steel powder or an alloy component diffusion-bonded to pure iron powder is used as the partially diffusion-alloyed steel powder, the cost of the rolling bearing as well as the raceway ring can be reduced.

Advantageous Effects of Invention

According to the present invention, the raceway ring that has an increased rolling fatigue life at low cost can be provided. Thus, through use of the raceway ring as the constituent component of the rolling bearing, the cost of the rolling bearing can be reduced.

Brief Description of Drawings

FIG. 1a is a sectional view of an outer ring.
FIG. 1b is a sectional view of a sintered metal material before plastic working.
FIG. 2 is a block diagram for illustrating manufacturing steps of a raceway ring.
FIG. 3 is a sectional view for illustrating a plastic working step.
FIG. 4a is a sectional view of an inner ring.
FIG. 4b is a sectional view of the sintered metal material before plastic working.
FIG. 5 is an enlarged sectional view of a contact ball bearing.
FIG. 6 is a sectional view of the contact ball bearing.
FIG. 7a is a photograph for showing the inner ring before a rolling fatigue life test.
FIG. 7b is a photograph for showing the inner ring after the rolling fatigue life test.
FIG. 8a is an enlarged photograph for showing the inner ring before the rolling fatigue life test.
FIG. 8b is an enlarged photograph for showing the inner ring after the rolling fatigue life test.
FIG. 9 is a table for showing results of the rolling fatigue life test.
FIG. 10 is an enlarged photograph of each cross-section of Example 1 and Comparative Example 1.
FIG. 11 is a plan view of the outer ring when viewed from the raceway surface side.
FIG. 12 is a model diagram for illustrating a contact between two objects.
FIG. 13 is an equal stress line chart under a contact surface.

Description of Embodiments

Now, an embodiment of the present invention is described with reference to the drawings.

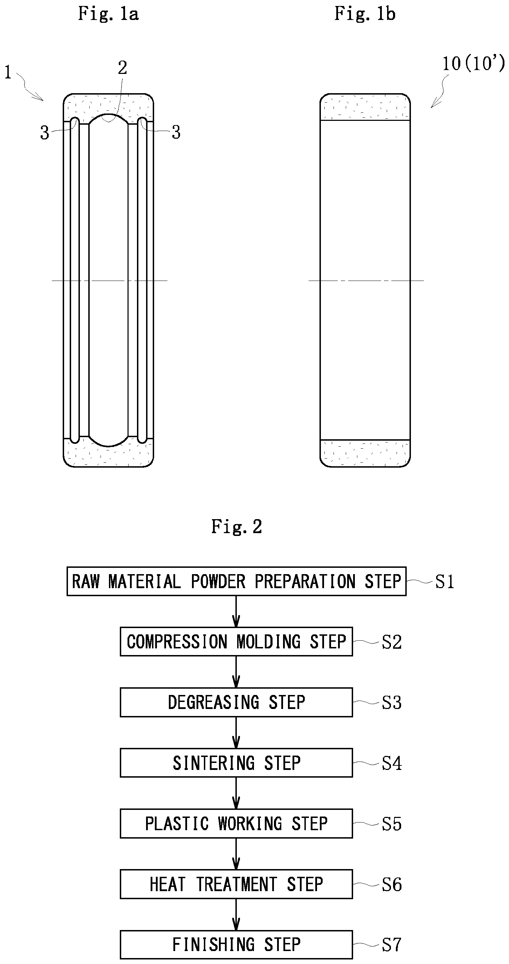

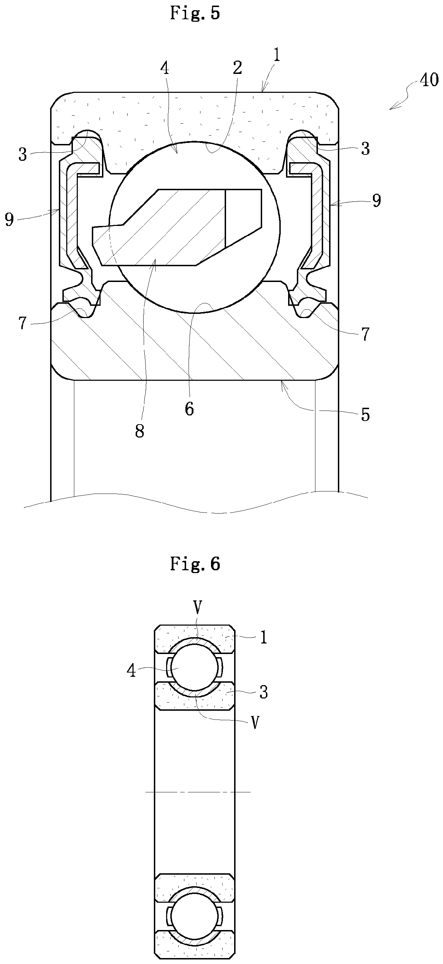

FIG. 1a is a sectional view of a raceway ring for a rolling bearing according to one embodiment of the present invention. The raceway ring illustrated in FIG. 1a is an outer ring 1, which being a constituent member of a single-row contact ball bearing, comprises an annular raceway surface 2, on which a ball serving as a rolling element rolls, substantially at the center of a radially inner surface in an axial direction. Annular seal mounting grooves 3 serving as seal portions are respectively formed on both sides of the raceway surface 2 in the axial direction. As illustrated in FIG. 5, a seal member 9 configured to seal a space between an inner peripheral surface of the outer ring 1 and an outer peripheral surface of an inner ring 5 is fixed to the seal mounting groove 3. The seal member 9 comprises a member that is not brought into contact with the raceway ring on a partner side, as well as a member that is brought into contact with the raceway ring (inner ring 5) on the partner side as illustrated in FIG. 5.

The outer ring 1 is formed of a sintered metal obtained by subjecting raw material powder to compression molding to form a green compact, and by heating the green compact to a sintering temperature or more to sinter the green compact. In this embodiment, the raceway surface 2 and the seal mounting grooves 3 are plastically worked surfaces formed by subjecting an inner peripheral surface of the sintered metal material to plastic working. At least the raceway surface 2 of the outer ring 1 is hardened by heat treatment.

The outer ring 1 is manufactured through a raw material powder preparation step S1, a compression molding step S2, a degreasing step S3, a sintering step S4, a plastic working step S5, a heat treatment step S6, and a finishing step S7 illustrated in FIG. 2.

In the raw material powder preparation step S1, raw material powder is produced by mixing iron-based low-alloy powder, carbon powder serving as a carbon solid solution source, and a lubricant for molding for use in lubrication at the time of molding.

Fe-Ni-Mo-based partially diffusion-alloyed steel powder containing Ni and Mo as an alloy component, with the balance being Fe and inevitable impurities, is used as the iron-based low-alloy powder. The partially diffusion-alloyed steel powder used in this embodiment is powder in which Ni is diffused on and joined to the periphery of an Fe-Mo alloy. When a metal, such as Ni, is diffused on and adheres onto an Fe alloy as described above, the hardness of the alloyed steel powder is reduced before sintering as compared to the alloyed steel powder in which Fe and Ni are completely alloyed (pre-alloyed steel powder), and hence moldability during compression molding is ensured. As a result, Ni can be blended in a relatively large amount. Specifically, in this embodiment, the blending ratio of Ni in the partially diffusion-alloyed steel powder is from 0.5 wt% to 5.0 wt%, preferably from 1.7 wt% to 2.2 wt%. Meanwhile, the addition of Mo in a large amount contrarily causes a reduction in moldability with the effect saturated. Therefore, the blending ratio of Mo in the partially diffusion-alloyed steel powder is from 0.5 wt% to 3.0 wt%, preferably from 0.8 wt% to 1.1 wt%, more preferably from 0.9 wt% to 1.1 wt%.

As the steel powder serving as a base of the partially diffusion-alloyed steel powder, atomized powder, reduced powder, and the like are present. However, particles of the reduced powder are porous and hence densification is difficult.

Therefore, the atomized powder, which is solid without pores, is used. In particular, in consideration of cost, water atomized powder is used in this embodiment. While the powder in which Ni is diffused on and joined to the periphery of Fe-Mo alloy is given as an example of the partially diffusion-alloyed steel powder, also alloy powder in which Ni or Mo is diffused on and joined to the periphery of pure iron powder may be used.

The partially diffusion-alloyed steel powder is soft and has a hardness comparable to that of pure iron powder. As an indication of the hardness of the partially diffusion-alloyed steel powder, powder having a micro-Vickers hardness of less than 120 HV 0.05, desirably less than 100 HV 0.05, more preferably less than 90 HV 0.05 is used. The hardness is lower than the hardness of particles of Fe-Cr-Mo-based completely alloyed powder (pre-alloyed powder) (roughly 120 HV 0.05 or more) used in Patent Literature 3. Therefore, as compared to this kind of completely alloyed powder, the partially diffusion-alloyed steel powder is easily densified even with the same pressing force.

As the partially diffusion-alloyed steel powder, it is desired that powder having a maximum particle diameter of 500 $\mu$m or less (preferably 250 $\mu$m or less, more preferably 200 $\mu$m or less) be used. This particle diameter can be obtained by sieving obtained powder through use of a sieve having an opening of an upper limit particle diameter (e.g., 500 $\mu$m). When coarse powder having a particle diameter of more than 500 $\mu$m is contained, the filling property in the compression molding step S2 described later is degraded, and coarse pores are liable to be formed in a sintered body. In alloyed steel powder having a fine particle diameter, the particle diameter is increased by granulation in some cases in order to prevent a decrease in flowability of powder in a mold. However, the partially diffusion-alloyed steel powder according to this embodiment has a large particle diameter and satisfactory flowability, and hence it is not basically necessary to granulate the power.

As the carbon powder, for example, artificial graphite powder is used. The graphite powder to be used has a particle diameter D90 of 8 $\mu$m or less, preferably 6 $\mu$m or less, more preferably 4 $\mu$m or less. In addition, the graphite powder to be used has a particle diameter D90 of 2 $\mu$m or more, preferably 3 $\mu$m or more. The blending ratio of the graphite powder is set to 0.35 wt% or less, preferably 0.3 wt% or less, more preferably 0.25 wt% or less with respect to the total of the mixed powder. In addition, the blending ratio of the graphite powder is set to 0.05 wt% or more, preferably 0.1 wt% or more, more preferably 0.15 wt% or more with respect to the total of the mixed powder. Other than the graphite powder, carbon black, ketjen black, nano carbon powder, or the like may also be used as the carbon powder. Any two or more kinds of those powders may be used.

As the lubricant for molding, a known lubricant powder, such as metal soap (for example, zinc stearate) or amide wax (for example, ethylene bis (stearamide)), may be appropriately selected and used. In order to achieve the object of the present invention, any kind of lubricant powder may be adopted as long as the lubricant powder is a component not remaining in a material after sintering. In addition, two or more kinds of lubricants for molding may be used in combination.

In the compression molding step S2, the above-mentioned raw material powder is loaded and filled into a cavity of a mold, and subjected to compression to mold a green compact 10. The molding at this time is performed with a molding machine suitable for continuous production, such as a uniaxial or multi-axial pressure molding machine, or a CNC press molding machine. As illustrated in FIG. 1b, the green compact 10 molded in the compression molding step S2 is molded into a ring shape in the same manner as in the outer ring 1 illustrated in FIG. 1a, but both a radially inner surface and a radially outer surface are formed as smooth cylindrical surfaces without unevenness.

The molding pressure in the compression molding step S2 is set to 588 MPa (6 tf/cm$^2$) or more, more preferably 980 MPa (10 tf/cm$^2$) or more. During the molding of the green compact 10, a lubricant for molding is liquefied due to the above-mentioned high pressing force, and the liquefied solid lubricant diffuses and permeates in the raw material powder. The above-mentioned molding pressure is merely a guideline. In order to achieve the object of the present invention, the density and the pore size of the sintered compact are also important, and hence the green compact 10 may be molded at a pressure lower than the above-mentioned molding pressure depending on the kind of the powder to be used and the molding conditions. Further, in order to achieve higher density, warm molding involving molding powder by heating the mold and the powder at 60°C or more may be adopted. Alternatively, in order to reduce the usage amount of the lubricant for molding, a molding machine using a mold lubricant may also be used.

In the degreasing step S3, the lubricant for molding contained in the green compact 10 is removed. Degreasing can be performed under the same conditions as those for manufacturing a general sintered metal product.

In the sintering step S4, the degreased green compact 10 is heated to a sintering temperature or more, to thereby form a sintered metal material 10'. In order to obtain the sintered metal material 10' that is dense and has small pores, the sintering temperature is set to 1,150°C or more and 1,350°C or less, more preferably 1,250°C or more and 1,300°C or less. Further, in order to prevent a decrease in a sintering property and strength caused by oxidation and decarburizing, it is preferred that the green compact 10 be sintered under an inert or reducing atmosphere containing, as main components, nitrogen, hydrogen, argon, and the like. The green compact 10 may also be sintered under vacuum. The sintered metal material 10' after the sintering has a relative density of 90% or more (preferably 95% or more, more preferably 97% or more).

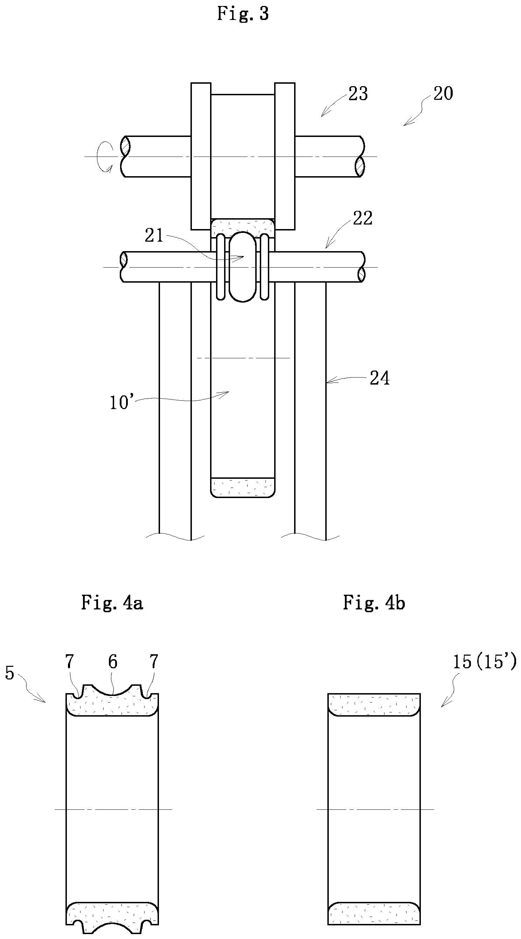

In the plastic working step S5, the sintered metal material 10' formed as described above is subjected to plastic working, to thereby form the raceway surface 2 and the seal mounting grooves 3 on the radially inner surface of the sintered metal material 10'. The forming of the raceway surface 2 and the forming of the seal mounting grooves 3 can be performed simultaneously through use of, for example, a rolling machine (ring rolling machine) 20 as illustrated in FIG. 3. The rolling machine 20 comprises a shaft-shaped mandrel 22 having a die portion 21 configured to form the raceway surface 2 and the seal mounting grooves 3 on an outer periphery, a die roll 23 configured to rotate in response to an output of a drive source (not shown) under a state in contact with the radially outer surface of the sintered metal material 10', and a support roll 24 configured to support the rotation of the mandrel 22. In the rolling machine 20, the radially inner and outer surfaces of the sintered metal material 10' are held between the mandrel 22 and the die roll 23 while the mandrel 22 inserted into the inner periphery of the sintered metal material 10' is supported by the support roll, and the die roll 23 is rotated while being pressed against the support roll 24 side. With this, the raceway surface 2 and the seal mounting grooves 3 are formed on the radially inner surface of the sintered metal material 10'.

The raceway surface 2 and the two seal mounting grooves 3 may be formed independently and successively instead of being formed simultaneously as described above. Further, the forming of the raceway surface 2 and the forming of the seal mounting groves 3 may be performed so as to involve the decrease in thickness and the increase in diameter of the metal sintered compact 10' or may be performed so as not to involve the decrease in thickness and the increase in diameter of the metal sintered compact 10'. As a plastic working method, cold rolling involving rolling the sintered metal material 10' while rotating the sintered metal material 10' at room temperature, further burnishing, and the like can be adopted. Even in the case where any plastic working method is adopted, when cold plastic working is performed, the accuracy of the raceway surface 2 and the seal mounting grooves 3 and the density on the periphery thereof can be efficiently increased as compared to the case where warm or hot plastic working is performed.

Further, processing (e.g., shot peening) involving projecting hard particles onto required parts such as the raceway surface 2, to thereby fill pores in the vicinity of a surface layer with the energy of the hard particles may be performed after plastic working of the raceway surface 2 and the like.

The heat treatment step S6 is the step of subjecting the sintered metal material 10' having the raceway surface 2 and the seal mounting grooves 3 formed thereon to hardening and tempering, to thereby harden at least the raceway surface 2 of the sintered metal material 10' to ensure the rolling fatigue life required in the raceway surface 2. As a procedure for hardening, besides through-hardening, various hardening treatments (or surface hardening treatments) such as carburizing, carbonitriding, and induction hardening can be adopted. When tempering is performed after hardening, the toughness of the inside of the sintered metal material is ensured, and hence the development of cracks is suppressed.

The finishing step S7 is the step of performing one or a plurality of finish processing, such as grinding, polishing, lapping, and superfinishing, to predetermined parts (e.g., the raceway surface 2 and the seal mounting grooves 3) of the metal sintered compact 10' having undergone the heat treatment step S6, to thereby further increase the accuracy of the predetermined parts of the metal sintered compact 10'. It suffices to perform the finishing step S7 as necessary, and the finishing step S7 is not necessarily required to be performed. Even when the finish processing is performed in the finishing step S7, the processing amount (processing time) is extremely small, and hence the influence of the finish processing on a yield and a processing man-hour is extremely minute.

The outer ring 1 manufactured through the above-mentioned steps has high density, and hence the mechanical strength comparable to that of the outer ring 1 formed of an ingot material can be obtained. Further, the raceway ring is made of a sintered metal, and the raceway surface 2 and the seal mounting grooves 3 are formed through plastic working. Therefore, near-net shape forming can be performed, and a material yield becomes satisfactory. Therefore, the cost of a rolling bearing can be reduced.

Next, the configuration of a rolling bearing is described.

FIG. 5 is a single-row contact ball bearing 40 that is a kind of a rolling bearing. The contact ball bearing 40 illustrated in FIG. 5 comprises the outer ring 1 having the annular raceway surface 2 formed on a radially inner surface, the inner ring 5 having an annular raceway surface 6 formed on a radially outer surface, a plurality of balls 4 serving as rolling elements arranged between the raceway surfaces 2 and 6, a cage 8 configured to hold the balls 4 at a predetermined interval in a circumferential direction, and the seal members 9 arranged on both sides of the balls 4 in an axial direction. A radially inner end portion of each seal member 9 is held in contact with a seal groove 7 formed on an outer peripheral surface of the inner ring 5 to form a contact seal. A radially outer end portion of the seal member 9 is press-fitted into the seal mounting groove 3 of the outer ring 1.

The inner ring 5 as well as the outer ring 1 of the contact ball bearing illustrated in FIG. 5 can also be manufactured by the above-mentioned manufacturing procedure. In this case, a green compact 15 having a cylindrical shape illustrated in FIG. 4b is manufactured through the raw material powder preparation step S1 and the compression molding step S2 in the same manner as the above, and then a sintered metal material 15' is manufactured through the degreasing step S3 and the sintering step S4. Then, the raceway surface 6 and the seal grooves 7 serving as seal portions are formed during the plastic working step S5. After that, the inner ring 5 illustrated in FIG. 4a is completed through the heat treatment step S6 and the finishing step S7.

In FIG. 5, the single-row contact ball bearing is illustrated as the rolling bearing, but the above-mentioned manufacturing procedure can also be applied to the manufacturing process of raceway rings in other types of rolling bearings, such as a cylindrical roller bearing, a tapered roller bearing, a needle-shaped roller bearing, and an angular contact ball bearing, as well as the single-row contact ball bearing. Needless to say, the above-mentioned manufacturing procedure can also be applied to a raceway ring for a double-row rolling bearing and a raceway ring for a thrust rolling bearing having a thrust raceway surface, as well as the raceway ring for a single-row rolling bearing. Further, depending on the application of a bearing, the above-mentioned procedure can also be applied to a raceway ring in which the seal mounting grooves 3 and the seal grooves are omitted, and further be applied to a rolling bearing not comprising the seal members 9.

When the raceway surface 2 (also including the seal mounting grooves 3) is subjected to plastic working as in the above-mentioned manufacturing procedure, a porous body can be further densified (highly densified) on the periphery of at least the raceway surface 2 of the sintered metal material 10' as compared to a region that is not easily supplied with pressing force during plastic working, for example, a center portion of the sintered metal material 10' in a thickness direction. It is considered that, when the periphery of the raceway surface 2 is formed so as to be densified, the coarse pores serving as stress concentration sources are reduced, and peeling and the like of the raceway surface 2 originated from the coarse pores do not occur easily, with the result that the repetition fatigue strength of the raceway ring is further enhanced.

As described above, it is considered that the presence or absence of the coarse pores on the periphery of the raceway surface significantly influences the durability life of the raceway ring. Therefore, in order to evaluate the durability life of the raceway ring, it is desired that the degree of the presence of the coarse pores be digitized in some form. As one measure for digitization, it is considered that the relative density of the sintered metal material 10' be defined as described in Patent Literature 3. Here, the relative density is represented by Expression (1).

$$\texttt{Relative density[\%]=Density of roughly shaped material and}$$

$$\texttt{raceway ring/True density×100 (Expression 1)}$$

The true density [g/cm$^3$] in Expression (1) refers to theoretical density of a material in which pores are not present in a roughly shaped material as in an ingot material, and specifically can be determined by Expression (2).

$$\texttt{True density=100/\{(Blending ratio of element A/Density of}$$

$$\texttt{element A)+(Blending ratio of element B/Density of element}$$

$$\texttt{B)+(Blending ratio of element C/Density of element C)+ …\}}$$

$$\texttt{(Expression 2)}$$

For example, the true density of a stainless material containing, as chemical components, 87.0 [wt%] of Fe and 13.0 [wt%] of Cr is determined by Expression (3) below based on the fact that the densities of the respective elements are 7.87 [g/cm$^3$] and 7.15 [g/cm$^3$].

$$\texttt{True density=100/\{(87.0/7.87)+(13.0/7.15)\}≈7.87}$$

$$\texttt{(Expression 3)}$$

However, the relative density is a criterion effective for evaluating the densifying degree of the entire raceway ring, but is not necessarily effective for evaluating the presence or absence of the coarse pores in a region limited to the periphery of the raceway surface. For example, even when the relative density of the entire raceway ring is less than a lower limit value, there is a risk in that the coarse pores may be present on the periphery of the raceway surface although the number thereof is small, and it is expected that the coarse pores may serve as origins of peeling. It is also considered to define the relative density of only the periphery of the raceway surface of the raceway ring, but it is not easy to strictly measure the relative density of such partial region of the raceway ring. Further, a region to be densified through plastic working should be originally determined in accordance with the load (surface pressure) applied to the raceway surface 2.

Based on the above-mentioned verification, in the present invention, a square root $\sqrt{\text{area}}_{max}$ [(area$_{max}$)$^{1/2}$] of

the maximum pore envelope area estimated to be present at least in a region of a risk volume of the raceway ring (depth at which a stress of 90% or more of the maximum shear stress is generally applied) in the raceway ring is paid attention to.

In this case, the risk volume refers to a volume of a portion in which there is a risk of the occurrence of peeling of the raceway surface and is represented by the following expression.

$$\text{Risk volume} = (\text{Contact ellipse long diameter}) \times (\text{Circumferential length of raceway surface}) \times (\text{Depth at which 90\% of maximum shear stress is applied})$$

Further, the depth of a maximum shear stress $\tau_{45}$ (maximum shear stress working on the surface at a tilt of 45°) can be calculated by a procedure described below.

For example, the case of an inner ring of a rolling bearing of Model No. 6206 made of an ingot material (material: SUJ2, Young's modulus: 21,200 kgf/mm$^2$, Poisson ratio: 0.33) is described.

Diameter of ball: 9.525 mm → radius 4.7625 mm
Number of balls: eight
Inner ring groove diameter: 9.716 mm → radius 4.858 mm
Inner ring groove bottom diameter: 36.975 mm → radius 18.4875 mm

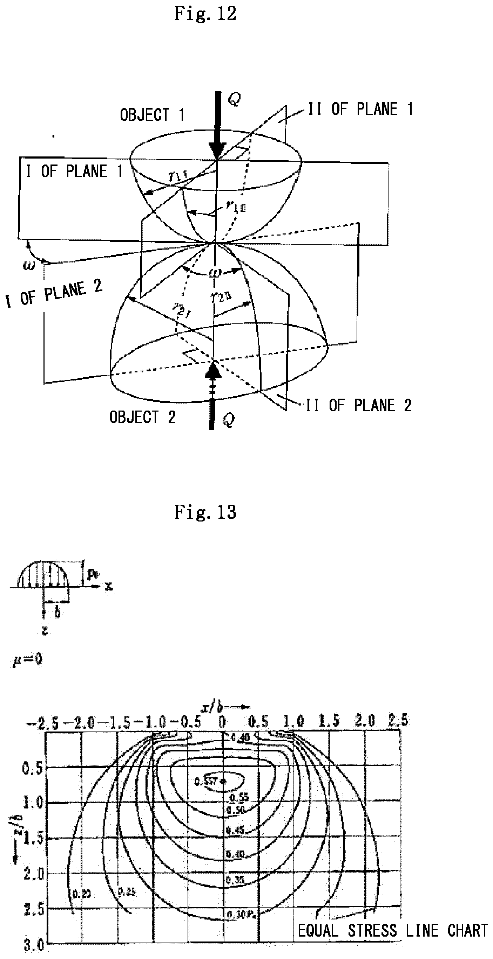

The contact of two objects illustrated in FIG. 12 is considered. An object 1 is defined as an inner ring, and an object 2 is defined as a ball (sphere).

A sum $\Sigma\rho$ of principal curvatures $\rho$ of the contact objects is represented by Expression (4).

(Expression 4)

$$\Sigma\rho = \rho_{1\mathrm{I}} + \rho_{1\mathrm{II}} + \rho_{2\mathrm{I}} + \rho_{2\mathrm{II}} = 1/4.7625 + 1/4.7625 + 1/18.4875 - 1/4.858 \doteqdot 0.268$$

The principal curvature $\rho$ is an inverse number of a radius and has a positive sign on a convex surface and a negative sign on a concave surface.

Further, an auxiliary variable $\cos\tau$ to be used in the following calculation is represented by Expression (5).

(Expression 5)

$$\cos\tau = \frac{\sqrt{(\rho_{1\mathrm{I}} - \rho_{1\mathrm{II}})^2 + 2(\rho_{1\mathrm{I}} - \rho_{1\mathrm{II}})(\rho_{2\mathrm{I}} - \rho_{2\mathrm{II}})\cos 2\omega + (\rho_{2\mathrm{I}} - \rho_{2\mathrm{II}})^2}}{\Sigma\rho} \doteqdot 0.969$$

As a coefficient of Hertz contact u, a Poisson ratio, and a kinetic viscosity of oil $\nu$, a medium value of upper and lower limits of a typical numerical value described in various documents can be adopted. In this case, $\mu$=4.99 and $\nu$=0.359 are satisfied.

When a test load Fr is represented by x (kgf), a maximum rolling element load is Fr/number of balls=x/8, and a short diameter b of a contact ellipse is represented by Expression (6).

(Expression 6)

$$b = \nu_3\sqrt{\frac{1.5 \times (x/8)}{\Sigma\rho \times (\Theta_1 + \Theta_2)}}$$

However,

$$\Theta_1 = \frac{4(1-1/m_1^2)}{E_1} \text{、} \quad \Theta_2 = \frac{4(1-1/m_2^2)}{E_2}$$

(Expression 7)

($m_1$ and $m_2$: Poisson ratio of inner ring and ball, $E_1$ and $E_2$: longitudinal elastic modulus of inner ring and ball)

Furth $\quad \cos\tau = \dfrac{\sqrt{(\rho_{1\mathrm{I}}-\rho_{1\mathrm{II}})^2 + 2(\rho_{1\mathrm{I}}-\rho_{1\mathrm{II}})(\rho_{2\mathrm{I}}-\rho_{2\mathrm{II}})\cos 2\omega + (\rho_{2\mathrm{I}}-\rho_{2\mathrm{II}})^2}}{\Sigma\rho} \doteqdot 0.969$

diameter b of the contact ellipse and the depth z at which $\tau_{45}$ occurs is shown in FIG. 13. Thus, a maximum shear stress depth Zmax≈0.75b is satisfied, and the short diameter b can be uniquely calculated (in this case, b=0.21 mm) when a test load (e.g., 630 kgf) is determined.

The auxiliary variable $\cos\tau$, the coefficient of Hertz contact $\mu$, and the kinetic viscosity of oil $\nu$ can also be calculated by each expression below with complete elliptic integrals being intermediaries.

(Expression 8)

$$\cos\ \tau = \frac{(2-\kappa^2)\,E - 2\,(1-\kappa^2)\,K}{\kappa^2\,E}$$

(Expression 9)

$$\mu = \sqrt[3]{\frac{1}{1-\kappa^2}\frac{2E}{\pi}}$$

(Expression 10)

$$\nu = \sqrt[3]{(1-\kappa^2)^{1/2}\frac{2E}{\pi}}$$

K and E respectively represent a first type complete elliptic integral and a second type complete elliptic integral and are values represented by the expressions below. Besides this, K and E can be determined from a numerical table.

(Expression 11)

$$K = \int_0^{\pi/2} \frac{d\phi}{\sqrt{1-\kappa^2\sin^2\phi}}$$

(Expression 12)

$$E = \int_0^{\pi/2} \sqrt{1-\kappa^2\sin^2\phi}\,d\phi$$

Next, an estimation procedure of a square root $\sqrt{area}_{max}$ of the maximum pore envelope area is described below.

First, it is assumed that the extremal distribution of pores of a sintered compact follows a double-exponential distribution. With this, a maximum value of the pore envelope area is estimated through use of extremal statistics. Specifically, a square root $\sqrt{area}_{max}$ of the estimated maximum pore envelope area is calculated through a procedure described below.

A test piece subjected to mirror polishing is observed with a microscope, and an image of a y region having a predetermined reference area $S_0$ (mm$^2$) is obtained. The obtained image is digitized through use of image analysis software, to thereby analyze the envelope area of a pore. The largest envelope area among the obtained envelope areas is defined as the maximum pore envelope area in the reference area $S_0$ (mm$^2$), and a square root thereof is defined as $\sqrt{area}_{max}$ in that region. This measurement is repeated n times by changing inspection areas.

The measured n pieces of $\sqrt{area}_{max}$ are arranged in ascending order, and each defined as $\sqrt{area}_{max,j}$ (j=1 to n). (see Expression (13))

$$\sqrt{area_{max,1}} \leq \sqrt{area_{max,2}} \leq \cdots \leq \sqrt{area_{max,n}}$$

(Expression 13)

Regarding each j (j=1 to n), a cumulative distribution function $F_j$(%) represented by Expression (14) and a standardized variable $y_j$ represented by Expression (15) are calculated.

$$F_j = \frac{j}{n+1} \times 100$$

(Expression 14)

$$y_j = -\ln\left(-\ln\frac{j}{n+1}\right)$$

(Expression 15)

$\sqrt{area}_{max}$ is taken on a coordinate horizontal axis of an extremal probability sheet, and the above-mentioned results are plotted to obtain an extremal distribution (F or y is taken on a vertical axis of the extremal probability sheet).

An approximated straight line by a least-square method is extrapolated into the extremal distribution, to thereby obtain a and b represented by Expression (16). In this case, y represents a standardized variable represented by Expression (17), T represents a recurrence period represented by Expression (18), V represents a volume (mm$^3$) of an estimation target region, $V_0$ represents a reference volume (mm$^3$) represented by Expression (19), and h represents an average value (mm) of the measured $\sqrt{area}_{max,j}$ represented by Expression (20).

$$\sqrt{area}_{max} = a \times y + b$$

(Expression 16)

$$y = -\ln\left(-\ln\frac{T-1}{T}\right)$$

(Expression 17)

$$T = \frac{V + V_0}{V_0}$$

(Expression 18)

$$V_0 = S_0 \times h$$

(Expression 19)

$$h = \sum \sqrt{area}_{max,j} / n \qquad \text{(Expression 20)}$$

It is shown that plotted points in from 10% to 85% of an F-scale that is the vertical axis of the extremal probability sheet are placed on an approximated straight line. With this, it can be verified that the obtained extremal distribution follows the double-exponential distribution.

The volume V of the estimation target region is substituted into Expression (18), and a point where the recurrence period T and the obtained extremal distribution intersect with each other is a square root $\sqrt{area}_{max}$ of the estimated maximum pore envelope area.

Next, in order to verify the influence of the magnitude of the value of the square root $\sqrt{area}_{max}$ of the estimated maximum pore envelope area on the rolling fatigue life of the raceway ring, a rolling fatigue life test was performed. A test method thereof is described below.

[Raceway Ring]

In this test, first, partially diffusion-alloyed steel powder (SIGMALOY 2010 manufactured by JFE Steel Corporation) containing 2 wt% of Ni, 1 wt% of Mo, and the balance of iron and inevitable impurities was prepared. Graphite powder (TIMREX F-10 manufactured by TIMCAL) was added to the powder at a ratio of 0.2 wt% as a carbon solid solution source, and ethylene bis (stearamide) (ACRAWAX C manufactured by Lonza Japan) was added to the powder at a ratio of 0.5 wt% as a lubricant for molding. The resultant was used as raw material powder. The powder was filled into a mold having outer diameter φ of 48 mm × inner diameter φ of 34 mm and a mold having outer diameter φ of 32 mm × inner diameter φ of 16 mm, respectively. Each filled powder was subjected to uniaxial pressing and sintered at 1,250°C for 150 minutes under an inert gas atmosphere containing nitrogen and hydrogen, to thereby provide a ring-shaped sintered metal material having a density of 7.5 g/cm$^3$. The former is a sintered metal material for an outer ring, and the latter is a sintered metal material for an inner ring. The density measurement results were obtained by an Archimedes method.

Then, the roughly shaped material ring was subjected to cold rolling as plastic working to form a raceway surface, and the resultant was subjected to a dimension correction step called sizing, to thereby control the dimension variation between the test pieces within a predetermined range. Further, the plastically worked product was subjected to carburizing treatment at 880°C and hardening by being heated to 840°C, followed by tempering at 180°C. Then, the resultant was subjected to a finishing step by polishing, to thereby provide an outer ring having outer diameter φ of 62 mm × inner diameter φ of 52.1 mm and an inner ring having outer diameter φ of 40 mm × inner diameter φ of 30 mm (hereinafter the inner and outer rings are defined as "Example 1"). The inner and outer rings comply with bearing inner and outer rings of JIS Z6206.

Further, as Comparative Example 1, inner and outer rings were manufactured by the same manufacturing method as that of Example 1 through use of completely alloyed powder containing 1.5 wt% of Cr, 0.2 wt% of Mo, 0.3 wt% of carbon (C), and the balance of iron (Comparative Example 1). The inner and outer rings thus obtained correspond to a test piece satisfying the conditions described in Patent Literature 3, and the sintering density thereof before plastic working is 6.8 g/cm$^3$ (relative density: about 87%).

In addition, for comparison, inner and outer rings were prepared by performing molding and sintering in the same way as in Example 1, followed by turning instead of plastic working, to thereby form a raceway ring shape, and performing carburizing heat treatment and finish processing in the same way as in Example 1 (Comparative Example 2), and inner and outer rings of a bearing of Model No. 6206 (material: SUJ2, heat treatment: through-hardening and tempering, open type without a seal, C3 gap) made of an ingot material were prepared (Comparative Example 3).

[Bearing]

Eight steel balls (JIS G20) of 3/8 inches made of bearing steel SUJ2 and a PA66 resin crown cage containing 25 wt% of GF were incorporated into each of the inner and outer rings according to Example 1 and Comparative Examples 1 to 3, to thereby assemble bearings of JIS 6206 (open type without a seal, C3 gap).

[Test Method]

As the test conditions for the rolling fatigue life test, the maximum contact surface pressure Pmax was set to 3.2 GPa, and the bearing rotation number was set to 3, 000 rpm. Turbine oil VG56 was used as lubricant oil, and during the test, this clean oil was circulated to be supplied to a bearing. The vibration of the bearing during the operation was monitored by a vibration detection device so that the test was suspended when damages such as peeling occurred in the bearing inner and outer rings, and the vibration of the bearing exceeded a predetermined value. A period of time from the start of the operation to the end thereof was recorded as the life of the bearing. Further, after the end of the test, the bearing was disassembled to check the damaged state of the inner and outer rings.

[Estimation of $\sqrt{area_{max}}$]

In this test, the reference area $S_0$ was set to 0.059 mm$^2$ (0.21 mm in depth $\times$ 0.279 mm in width), the detection number n was set to 32, the prediction volume V of the inner ring was set to 250 mm$^3$, and the prediction volume V of the outer ring 3 was set to 350 mm$^3$. The depth of the reference area was set to an approximate value of 0.21 mm of a depth at which 90% of a maximum shear stress was applied in a depth direction from the surface layer of the raceway surface (depth of a risk volume region), and the width thereof was set to 0.279 mm that was 1.33 times the depth. In the reference area, observation of a cross-section was performed in 50 or more of field of views, and image processing and data extraction were performed by the above-mentioned procedure. A square root $\sqrt{area_{max}}$ of the maximum pore envelope area included in the prediction volume of the raceway ring was estimated through use of the top 32 pieces of each obtained $\sqrt{area_{max,j}}$. In this case, the prediction volume V was set to a region extending from the entire raceway surface to the depth of about 0.21 mm of thickness (rotary body obtained by rotating a shaded portion V of FIG. 6 by one revolution). The prediction volume V was set to 350 mm$^3$ in the outer ring 1 and 250 mm$^3$ in the inner ring 3. The numerical values of the prediction volume were set to be slightly larger than those of an actual risk volume (about 320 mm$^3$ in the outer ring and about 210 mm$^3$ in the inner ring) in order to perform evaluation on a safer side.

[Review]

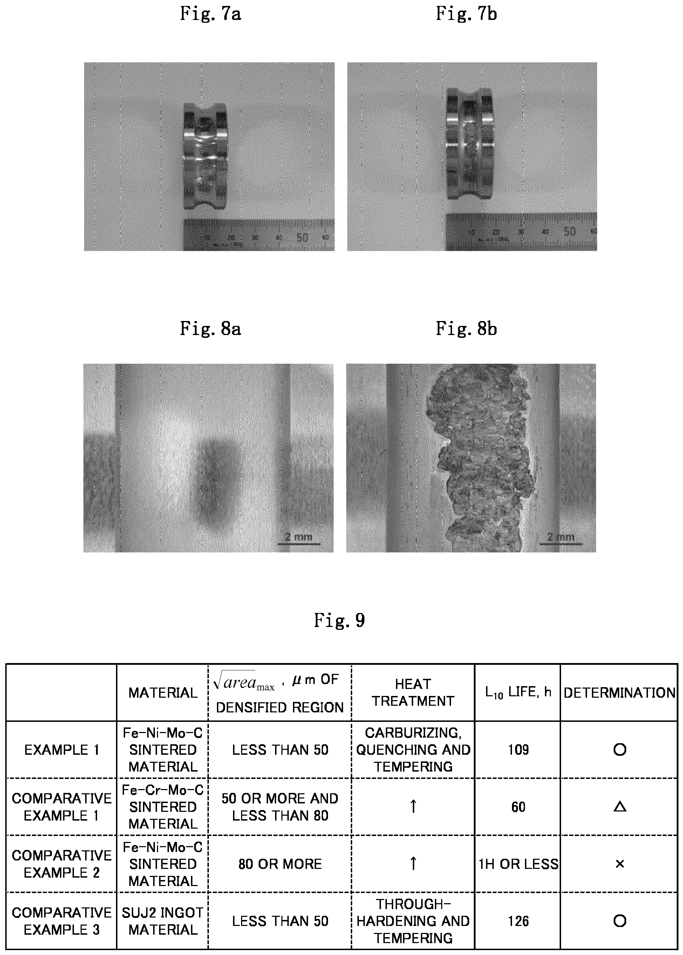

The results of the above-mentioned rolling fatigue life test are shown in FIG. 9. In a determination column of the test results, the rolling fatigue life was determined based on $L_{10}$ life converted into time. o represents the $L_{10}$ life of 100 or more, $\triangle$ represents the $L_{10}$ life of 50 or more and less than 100, and $\times$ represents the $L_{10}$ life of less than 50.

It was made clear from the comparison between Example 1 and Comparative Examples 1 and 2 shown in FIG. 9 that the rolling fatigue life of the raceway ring increased as the estimated value of the square root $\sqrt{area_{max}}$ of the maximum pore envelope area was smaller. Further, it was made clear that, when the estimated value was less than 50 $\mu$m, the life did not reach that of the bearing using the inner and outer rings made of SUJ2 of Comparative Example 3, but was about 70% to about 80% of the $L_{10}$ life of the bearing. Based on the foregoing, it is considered that there is a possibility that the bearing made of an ingot material (Comparative Example 3) can be used in Example 1, depending on the usage environment and conditions. Even in Example 1, the damage (flaking) at a time of the expiration of the rolling fatigue life is considered to be peeling originated from an inner portion of the inner ring or the outer ring in the same manner as in the bearing made of an ingot material such as SUJ2. As a typical example of the damage in Example 1, a photograph before and after the test of the inner ring in which peeling has occurred is shown in FIG. 7b, and a photograph of the peeled portion in an enlarged state is shown in FIG. 8b. FIG. 7a and FIG. 8a are both photographs in a state before the test.

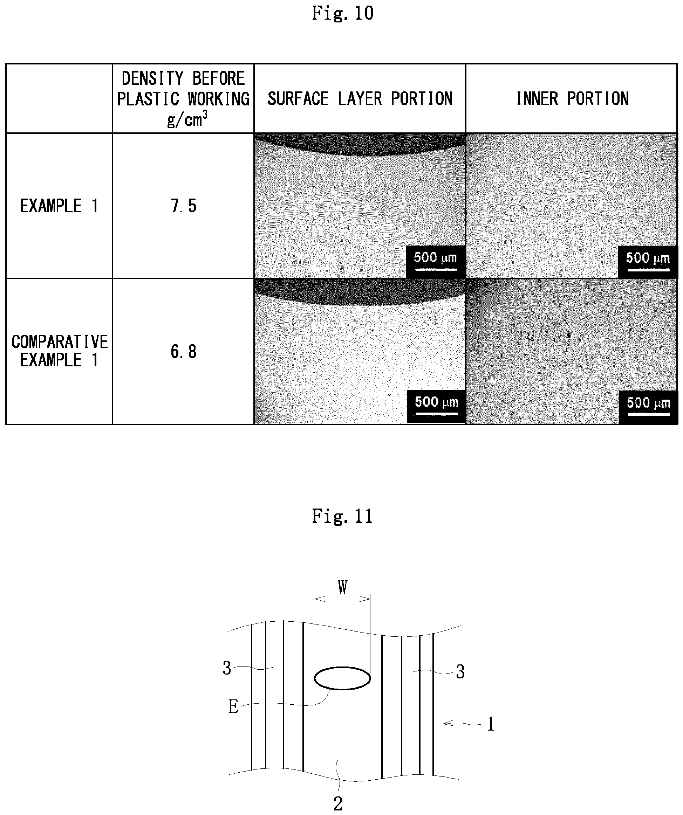

Next, the cross-sections of the inner and outer rings made of a sintered metal according to Example 1 and Comparative Example 1 were observed. A cross-section for observation is obtained by cutting the inner and outer rings with a surface that is perpendicular to end surfaces and passes through each center, filling a resin into the resultant, and subjecting the cut surface to mirror finish. The number of pores and the size of the pores in the cross-section were observed through use of a digital microscope (VHX-900 manufactured by Keyence Corporation). FIG. 10 is an enlarged photograph for showing typical examples of the observation results of a surface layer and an inner portion (region not subjected to plastic working) of the outer rings according to Example 1 and Comparative Example 1.

As is apparent from FIG. 10, in Example 1, the density is increased to 7.5 g/cm$^3$ (relative density: about 96%) in a stage before plastic working, and hence there are no coarse pores having a square root $\sqrt{area_{max}}$ of the estimated maximum envelope area of more than 50 $\mu$m in the inner portion. The region not subjected to plastic working has such densified structure, and hence there are no coarse pores having a square root $\sqrt{area_{max}}$ of the estimated maximum envelope area of more than 50 $\mu$m in the surface layer portion subj ected to plastic working (in particular, a region having a depth smaller than the depth corresponding to a risk volume). Further, in the surface layer portion, no pores having a square root of the estimated maximum envelope area of more than 20 $\mu$m were observed.

Meanwhile, in Comparative Example 1, the density before plastic working is 6.8 g/cm$^3$ (relative density: about 87%), and the density is not sufficiently increased. Therefore, a large number of pores including coarse pores having a square root of the estimated maximum envelope area of more than 100 $\mu$m were similarly observed in the inner portion. When the sintered compact was subjected to plastic working, most of the region of the surface layer portion was filled and densified, but part of the pores was not filled completely. Therefore, it was verified that a plurality of coarse pores having a square root of the estimated maximum envelope area of more than 50 $\mu$m remained also in a shallow region within hundreds of $\mu$m of the surface layer generally considered to be a risk volume.

As described above, in the present invention, with a risk volume of a raceway ring being adopted as a prediction volume, a square root $\sqrt{area}_{max}$ of the maximum pore envelope area estimated to be present at least in the prediction volume is set to be less than 50 μm (preferably less than 40 μm, more preferably less than 30 μm), and hence no coarse pores are present on the periphery of the raceway surface. Therefore, the damages such as peeling originated from the coarse pores can be prevented from occurring in the raceway ring, and the rolling fatigue life comparable to that of an ingot material can be obtained.

Particularly in the present invention, Fe-Ni-Mo-based partially diffusion-alloyed steel is used, and this powder is soft to such a degree as that of pure iron powder as described above. Therefore, the powder can be densified during compression molding, and due to the synergy of this densifying action and the densifying action obtained through plastic working, the formation of coarse pores on the periphery of the raceway surface can be avoided. Further, the formability at a time of forming the raceway surface 2 and the like through plastic working becomes satisfactory. Further, this powder is easily available and has low cost, and hence the cost of the rolling bearing as well as the raceway ring can be reduced.

In contrast, in the raceway ring according to Comparative Example 1, the coarse pores remain in the surface layer portion including the raceway surface. The reason for this is considered as follows. The Fe-Cr-Mo-based alloyed powder used in Comparative Example 1 contains Cr that is easily oxidized, and hence pre-alloyed powder obtained by alloying an alloy component in advance is generally used, with the result that the powder is hardened. When hard powder is molded, cracks and lamination occur during high-pressure molding. Therefore, hard powder should be subjected to low-pressure molding. However, it is difficult to densify the hard powder through low-pressure molding, and hence the coarse pores are formed in a sintered compact.

In Patent Literature 3, there is also described that stainless steel powder such as SUS420 and bearing steel powder such as SUJ2 are used, besides the Fe-Cr-Mo-based alloyed powder according to Comparative Example 1. However, those steel powders also contain a large amount of Cr, and hence the same problem as that of Comparative Example 1 occurs.

In Example 1, when the square root $\sqrt{area}_{max}$ of the maximum pore envelope area is estimated, the numerical value of the prediction volume is set to be slightly larger than the actual risk volume, and the region including the entire raceway surface in the axial direction is adopted as the prediction volume V (see FIG. 6). The reason for this is to perform evaluation on the safer side also considering that an axial load and the like act on the bearing. When the risk volume corresponding to the axial width (long diameter) of a contact ellipse is adopted as the prediction volume V, and the square root of the maximum pore envelope area is set to less than 50 μm at least within the prediction volume, the rolling fatigue life of the raceway ring can be increased.

Further, in the above-mentioned description, the case of determining the prediction volume V based on the risk volume and estimating the square root $\sqrt{area}_{max}$ of the maximum pore envelope area is described. However, besides this, a region that extends to the depth at which the maximum shear stress is applied is assumed within a range of an axial width W of a contact ellipse E generated on the raceway surface 2, and with at least this region being adopted as the prediction volume V, the square root $\sqrt{area}_{max}$ of the maximum pore envelope area can also be estimated. With this, the coarse pores can be prevented from being present up to the region deeper than the risk volume, and the rolling fatigue life of the raceway ring can be further increased.

Reference Signs List

1   outer ring
2   raceway surface of outer ring
3   seal mounting groove (seal portion)
4   rolling element
5   inner ring
6   raceway surface of inner ring
7   seal groove (seal portion)
8   cage
9   seal member
E   contact ellipse

**Claims**

1. A raceway ring (1, 5) for a bearing, comprising a raceway surface (2, 6) on which a rolling element (4) rolls, the raceway surface (2, 6) being formed by subjecting a sintered metal material (15') to plastic working (S5),

wherein the sintered metal material (15') is formed by subjecting Fe-Ni-Mo based partially diffusion-alloyed steel powder to compression molding (S2), followed by sintering (S4), wherein the partially diffusion-alloyed steel powder consists of 0.5 wt% to 5 wt% of Ni and 0.5 wt% to 3 wt% of Mo, and a balance of Fe and inevitable impurities, the partially diffusion-alloyed steel powder is powder in which Ni is diffused on and joined to a periphery of an Fe-Mo alloy, and

with at least a risk volume being adopted as a prediction volume, a square root $\sqrt{area}_{max}$ of a maximum pore envelope area estimated through use of extremal statistics to be present in the prediction volume is less than 50 μm,

wherein the risk volume = (Contact ellipse long diameter) × (Circumferential length of raceway surface) × (Depth at which 90% of maximum shear stress is applied),

wherein the square root $\sqrt{area}_{max}$ of the estimated maximum pore envelope area is obtained through the following steps (1) to (12) described below:

(1) observing a test piece subjected to mirror polishing with a microscope,

(2) obtaining an image having a predetermined reference area $S_0$ (mm²),

(3) digitizing the obtained image through use of image analysis software, to thereby analyze the envelope area of a pore,

(4) defining the largest envelope area among the obtained envelope areas as the maximum pore envelope area in the reference area $S_0$, and defining a square root thereof as $\sqrt{area}_{max}$ in that region,

(5) repeating this measurement n times by changing inspection areas,

(6) arranging the measured n pieces of $\sqrt{area}_{max}$ in ascending order, and defining each as $\sqrt{area}_{max,j}$ (j=1 to n),

(7) calculating a cumulative distribution function $F_j$(%) represented by Expression (14) and a standardized variable $y_j$ represented by Expression (15), regarding each j (j=1 to n),

$$F_j = \frac{j}{n+1} \times 100$$

(Expression 14)

$$y_j = -\ln\left(-\ln\frac{j}{n+1}\right)$$

(Expression 15)

(8) taking $\sqrt{area}_{max}$ on a coordinate horizontal axis of an extremal probability sheet, and plotting the above-mentioned results to obtain an extremal distribution with taking F or y on a vertical axis of the extremal probability sheet,

(9) extrapolating an approximated straight line by a least-square method into the extremal distribution, to thereby obtain a and b represented by Expression (16) ("y" represents a standardized variable represented by Expression (17), "T" represents a recurrence period represented by Expression (18), "V" represents a volume (mm³) of an estimation target region, "$V_0$" represents a reference volume (mm³) represented by Expression (19), and "h" represents an average value (mm) of the measured $\sqrt{area}_{max,j}$ represented by Expression (20)),

$$\sqrt{area}_{max} = a \times y + b$$

(Expression 16)

$$y = -\ln\left(-\ln\frac{T-1}{T}\right)$$

(Expression 17)

$$T = \frac{V + V_0}{V_0}$$

(Expression 18)

$$V_0 = S_0 \times h$$

(Expression 19)

$$h = \sum \sqrt{area}_{max,j} / n$$

(Expression 20)

(10) showing that plotted points in from 10% to 85% of an F-scale that is the vertical axis of the extremal probability sheet are placed on an approximated straight line, thereby verifying that the obtained extremal distribution follows a double-exponential distribution,
(11) substituting the volume V of the estimation target region into Expression (18),
(12) obtaining a point where the recurrence period T and the obtained extremal distribution intersect with each other as square root $\sqrt{area}_{max}$ of the estimated maximum pore envelope area.

2. A raceway ring (1, 5) for a bearing, comprising a raceway surface (2, 6) on which a rolling element (4) rolls, the raceway surface (2, 6) being formed by subjecting a sintered metal material (15') to plastic working (S5),

wherein the sintered metal material (15') is formed by subjecting Fe-Ni-Mo based partially diffusion-alloyed steel powder to compression molding (S2), followed by sintering (S4), wherein the partially diffusion-alloyed steel powder consists of 0.5 wt% to 5 wt% of Ni and 0.5 wt% to 3 wt% of Mo, and a balance of Fe and inevitable impurities, the partially diffusion-alloyed steel powder is powder in which Ni is diffused on and joined to a periphery of an Fe-Mo alloy, and
with a region extending to a depth at which a maximum shear stress is applied within a range of an axial width of a contact ellipse (E) generated on the raceway surface (2, 6) being adopted as a prediction volume, a square root $\sqrt{area}_{max}$ of a maximum pore envelope area estimated through use of extremal statistics to be present in the prediction volume is less than 50 $\mu$m,
wherein the square root $\sqrt{area}_{max}$ of the estimated maximum pore envelope area is obtained through the following steps (1) to (12) described below:

(1) observing a test piece subjected to mirror polishing with a microscope,
(2) obtaining an image having a predetermined reference area $S_0$ (mm$^2$),
(3) digitizing the obtained image through use of image analysis software, to thereby analyze the envelope area of a pore,
(4) defining the largest envelope area among the obtained envelope areas as the maximum pore envelope area in the reference area $S_0$, and defining a square root thereof as $\sqrt{area}_{max}$ in that region,
(5) repeating this measurement n times by changing inspection areas,
(6) arranging the measured n pieces of $\sqrt{area}_{max}$ in ascending order, and defining each as $\sqrt{area}_{max,j}$ (j=1 to n),
(7) calculating a cumulative distribution function $F_j$(%) represented by Expression (14) and a standardized variable $y_j$ represented by Expression (15), regarding each j (j=1 to n),

$$F_j = \frac{j}{n+1} \times 100$$

(Expression 14)

$$y_j = -\ln\left(-\ln\frac{j}{n+1}\right)$$

(Expression 15)

(8) taking $\sqrt{area}_{max}$ on a coordinate horizontal axis of an extremal probability sheet, and plotting the above-mentioned results to obtain an extremal distribution with taking F or y on a vertical axis of the extremal probability sheet,

(9) extrapolating an approximated straight line by a least-square method into the extremal distribution, to thereby obtain a and b represented by Expression (16) ("y" represents a standardized variable represented by Expression (17), "T" represents a recurrence period represented by Expression (18), "V" represents a volume ($mm^3$) of an estimation target region, "$V_0$" represents a reference volume ($mm^3$) represented by Expression (19), and "h" represents an average value (mm) of the measured $\sqrt{area}_{max,j}$ represented by Expression (20)),

$$\sqrt{area}_{max} = a \times y + b$$

(Expression 16)

$$y = -\ln\left(-\ln\frac{T-1}{T}\right)$$

(Expression 17)

$$T = \frac{V + V_0}{V_0}$$

(Expression 18)

$$V_0 = S_0 \times h$$

(Expression 19)

$$h = \sum \sqrt{area}_{max,j} / n$$

(Expression 20)

(10) showing that plotted points in from 10% to 85% of an F-scale that is the vertical axis of the extremal probability sheet are placed on an approximated straight line, thereby verifying that the obtained extremal distribution follows a double-exponential distribution,

(11) substituting the volume V of the estimation target region into Expression (18),

(12) obtaining a point where the recurrence period T and the obtained extremal distribution intersect with each other as square root $\sqrt{area}_{max}$ of the estimated maximum pore envelope area.

3. The raceway ring (1, 5) for a bearing according to claim 1 or 2, wherein the partially diffusion-alloyed steel powder comprises water-atomized steel powder or an alloy component diffusion-bonded to pure iron powder.

4. The raceway ring (1, 5) for a bearing according to any one of claims 1 to 3, wherein at least the raceway surface (2, 6) is hardened by heat treatment (S6).

5. The raceway ring (1, 5) for a bearing according to any one of claims 1 to 4, wherein the plastic working (S5) comprises at least one of cold rolling, roll-processing, burnishing, or shot peening.

6. The raceway ring (1, 5) for a bearing according to any one of claims 1 to 5, further comprising a seal portion (3) that is held in contact with or is close to a seal member (9), the seal portion (3) being formed by subjecting the sintered metal material to the plastic working (S5).

7. A rolling bearing, comprising:

an outer ring (1) having an outer raceway surface (2) on an inner periphery;
an inner ring (5) having an inner raceway surface (6) on an outer periphery;
a plurality of rolling elements (4) arranged between the outer raceway surface (6) and the inner raceway surface (2); and
a cage (8) configured to hold the rolling elements (4),
wherein the raceway ring (1, 5) for a bearing of any one of claims 1 to 6 is used as at least one or both of the outer ring (1) and the inner ring (5).

**Patentansprüche**

1. Laufring (1, 5) für ein Lager, umfassend eine Lauffläche (2, 6), auf der ein Wälzkörper (4) abrollt, wobei die Lauffläche (2, 6) durch plastische Bearbeitung (S5) eines gesinterten Metallmaterials (15') gebildet ist,

wobei das gesinterte Metallmaterial (15') gebildet ist, indem partiell diffusionslegiertes Stahlpulver auf Fe-Ni-Mo-Basis einer Formpressung (S2) unterzogen wird, gefolgt von einer Sinterung (S4), wobei das partiell diffusionslegierte Stahlpulver aus 0,5 Gew.-% bis 5 Gew.-% Ni und 0,5 Gew.-% bis 3 Gew.-% Mo und einem Rest an Fe und unvermeidlichen Verunreinigungen besteht, wobei das teilweise diffusionslegierte Stahlpulver ein Pulver ist, in dem Ni auf einen Außenbereich einer Fe-Mo-Legierung aufdiffundiert und mit diesem verbunden ist, und
wobei mindestens ein Risikovolumen als Vorhersagevolumen angenommen wird, eine Quadratwurzel einer maximalen Porenhüllenfläche ($\sqrt{area}_{max}$), die unter Verwendung von Extremwertstatistiken als in dem Vorhersagevolumen vorhanden geschätzt wird, weniger als 50 $\mu$m beträgt,
wobei das Risikovolumen = (Längsdurchmesser der Kontaktellipse) $\times$ (Umfangslänge der Lauffläche) $\times$ (Tiefe, in der 90 % der maximalen Scherspannung aufgebracht werden), wobei die Quadratwurzel $\sqrt{area}_{max}$ der geschätzten maximalen Porenhüllfläche durch die nachstehend beschriebenen Schritte (1) bis (12) erhalten wird:

(1) Beobachtung eines Teststücks, das einem Spiegelpolieren mit einem Mikroskop unterzogen wird,
(2) Erhalten eines Bildes mit einer vorbestimmten Referenzfläche $S_0$ (mm$^2$),
(3) Digitalisieren des erhaltenen Bildes durch Verwendung einer Bildanalysesoftware, um dadurch die Hüllfläche einer Pore zu analysieren,
(4) Definieren der größten Hüllfläche unter den erhaltenen Hüllflächen als die maximale Porenhüllfläche in der Referenzfläche $S_0$ und Definieren einer Quadratwurzel davon als $\sqrt{area}_{max}$ in diesem Bereich,
(5) Wiederholung dieser Messung n-mal durch Änderung der Inspektionsbereiche,
(6) Anordnen der gemessenen n Teile von $\sqrt{area}_{max}$ in aufsteigender Reihenfolge und Definieren jedes Teils als $\sqrt{area}_{max,j}$ (j=1 bis n),
(7) Berechnen einer kumulativen Verteilungsfunktion $F_j$(%), dargestellt durch Ausdruck (14), und einer standardisierten Variablen $y_j$, dargestellt durch Ausdruck (15), für jedes j (j=1 bis n),

$$F_j = \frac{j}{n+1} \times 100$$

(Ausdruck 14)

$$y_j = -\ln\left(-\ln\frac{j}{n+1}\right)$$

(Ausdruck 15)

(8) Einsetzen von $\sqrt{area}_{max}$ auf einer horizontalen Koordinatenachse eines Extremwertwahrscheinlichkeitsbogens und Auftragen der oben erwähnten Ergebnisse, um eine Extremwertverteilung zu erhalten, wobei F oder y auf einer vertikalen Achse des Extremwertwahrscheinlichkeitsbogens eingesetzt wird,
(9) Extrapolieren einer angenäherten Geraden durch eine Methode der kleinsten Quadrate in die Extremwertverteilung, um dadurch a und b zu erhalten, die durch den Ausdruck (16) dargestellt werden ("y" stellt eine standardisierte Variable dar, die durch den Ausdruck (17) dargestellt wird, "T" stellt eine Wiederholungsperiode dar, die durch den Ausdruck (18) dargestellt wird, "V" stellt ein Volumen (mm$^3$) einer Schätzungszielregion dar, "Vo" stellt ein Referenzvolumen (mm$^3$) dar, dargestellt durch Ausdruck (19), und "h" stellt einen Durchschnittswert (mm) des gemessenen $\sqrt{area}_{max,j}$ dar, dargestellt durch Ausdruck (20)),

$$\sqrt{area}_{\max} = a \times y + b$$

(Ausdruck 16)

$$y = -\ln\left(-\ln\frac{T-1}{T}\right)$$

(Ausdruck 17)

$$T = \frac{V + V_0}{V_0}$$

(Ausdruck 18)

$$V_0 = S_0 \times h$$

(Ausdruck 19)

$$h = \sum \sqrt{area}_{\max,j} \, / \, n$$

(Ausdruck 20)

(10) Zeigen, dass die aufgezeichneten Punkte im Bereich von 10 % bis 85 % einer F-Skala, die die vertikale Achse des Extremwertwahrscheinlichkeitsbogens darstellt, auf einer angenäherten Geraden liegen, wodurch überprüft wird, dass die erhaltene Extremwertverteilung einer Doppelexponentialverteilung folgt,
(11) Einsetzen des Volumens V der Schätzungszielregion in Ausdruck (18),
(12) Ermitteln eines Punktes, an dem sich die Wiederholungsperiode T und die erhaltene Extremwertverteilung als Quadratwurzel $\sqrt{area}_{max}$ der geschätzten maximalen Porenhüllenfläche schneiden.

2. Laufring (1, 5) für ein Lager, umfassend eine Lauffläche (2, 6), auf der ein Wälzkörper (4) abrollt, wobei die Lauffläche (2, 6) durch plastische Bearbeitung (S5) eines gesinterten Metallmaterials (15') gebildet ist,

wobei das gesinterte Metallmaterial (15') gebildet ist, indem partiell diffusionslegiertes Stahlpulver auf Fe-Ni-Mo-Basis einer Formpressung (S2) unterzogen wird, gefolgt von einer Sinterung (S4), wobei das partiell diffusionslegierte Stahlpulver aus 0,5 Gew.-% bis 5 Gew.-% Ni und 0,5 Gew.-% bis 3 Gew.-% Mo und einem Rest an Fe und unvermeidlichen Verunreinigungen besteht, wobei das teilweise diffusionslegierte Stahlpulver ein Pulver ist, in dem Ni auf einen Außenbereich einer Fe-Mo-Legierung aufdiffundiert und mit diesem verbunden ist, und
wobei ein Bereich, der sich bis zu einer Tiefe erstreckt, in der eine maximale Scherspannung innerhalb eines Bereichs einer axialen Breite einer auf der Laufbahnoberfläche (2, 6) erzeugten Kontaktellipse (E) anliegt, als ein Vorhersagevolumen angenommen wird, wobei eine Quadratwurzel einer maximalen Porenhüllenfläche ($\sqrt{area}_{max}$), die unter Verwendung von Extremwertstatistiken als in dem Vorhersagevolumen vorhanden geschätzt wird, weniger als 50 $\mu$m beträgt,
wobei die Quadratwurzel $\sqrt{area}_{max}$ der geschätzten maximalen Porenhüllfläche durch die folgenden, unten beschriebenen Schritte (1) bis (12) erhalten wird:

(1) Beobachtung eines Teststücks, das einem Spiegelpolieren mit einem Mikroskop unterzogen wird,

(2) Erhalten eines Bildes mit einer vorbestimmten Referenzfläche $S_0$ (mm$^2$),

(3) Digitalisieren des erhaltenen Bildes durch Verwendung einer Bildanalysesoftware, um dadurch die Hüllfläche einer Pore zu analysieren,

(4) Definieren der größten Hüllfläche unter den erhaltenen Hüllflächen als die maximale Porenhüllfläche in der Referenzfläche $S_0$ und Definieren einer Quadratwurzel davon als $\sqrt{area}_{max}$ in diesem Bereich,

(5) Wiederholung dieser Messung n-mal durch Änderung der Inspektionsbereiche,

(6) Anordnen der gemessenen n Teile von $\sqrt{area}_{max}$ in aufsteigender Reihenfolge und Definieren jedes Teils als $\sqrt{area}_{max,j}$ (j=1 bis n),

(7) Berechnen einer kumulativen Verteilungsfunktion $F_j$(%), dargestellt durch Ausdruck (14), und einer standardisierten Variablen $y_j$, dargestellt durch Ausdruck (15), für jedes j (j=1 bis n),

$$F_j = \frac{j}{n+1} \times 100$$

(Ausdruck 14)

$$y_j = -\ln\left(-\ln\frac{j}{n+1}\right)$$

(Ausdruck 15)

(8) Einsetzen von $\sqrt{area}_{max}$ auf einer horizontalen Koordinatenachse eines Extremwertwahrscheinlichkeitsbogens und Auftragen der oben erwähnten Ergebnisse, um eine Extremwertverteilung zu erhalten, wobei F oder y auf einer vertikalen Achse des Extremwertwahrscheinlichkeitsbogens eingesetzt wird,

(9) Extrapolieren einer angenäherten Geraden durch eine Methode der kleinsten Quadrate in die Extremwertverteilung, um dadurch a und b zu erhalten, die durch den Ausdruck (16) dargestellt werden ("y" stellt eine standardisierte Variable dar, die durch den Ausdruck (17) dargestellt wird, "T" stellt eine Wiederholungsperiode dar, die durch den Ausdruck (18) dargestellt wird, "V" stellt ein Volumen (mm$^3$) einer Schätzungszielregion dar, "Vo" stellt ein Referenzvolumen (mm$^3$) dar, dargestellt durch Ausdruck (19), und "h" stellt einen Durchschnittswert (mm) des gemessenen $\sqrt{area}_{max,j}$ dar, dargestellt durch Ausdruck (20)),

$$\sqrt{area}_{max} = a \times y + b$$

(Ausdruck 16)

$$y = -\ln\left(-\ln\frac{T-1}{T}\right)$$

(Ausdruck 17)

$$T = \frac{V+V_0}{V_0}$$

(Ausdruck 18)

$$V_0 = S_0 \times h$$

(Ausdruck 19)

$$h = \sum \sqrt{area}_{\max, j} / n$$

(Ausdruck 20)

(10) Zeigen, dass die aufgezeichneten Punkte im Bereich von 10 % bis 85 % einer F-Skala, die die vertikale Achse des Extremwertwahrscheinlichkeitsbogens darstellt, auf einer angenäherten Geraden liegen, wodurch überprüft wird, dass die erhaltene Extremwertverteilung einer Doppelexponentialverteilung folgt,
(11) Einsetzen des Volumens V der Schätzungszielregion in Ausdruck (18),
(12) Ermitteln eines Punktes, an dem sich die Wiederholungsperiode T und die erhaltene Extremwertverteilung als Quadratwurzel $\sqrt{area}_{max}$ der geschätzten maximalen Porenhüllenfläche schneiden.

3. Laufring (1, 5) für ein Lager nach Anspruch 1 oder 2, wobei das partiell diffusionslegierte Stahlpulver wasserverdüstes Stahlpulver oder eine an reines Eisenpulver diffusionsgebundene Legierungskomponente umfasst.

4. Laufring (1, 5) für ein Lager nach einem der Ansprüche 1 bis 3, wobei zumindest die Lauffläche (2, 6) durch Wärmebehandlung (S6) gehärtet ist.

5. Laufring (1, 5) für ein Lager nach einem der Ansprüche 1 bis 4, wobei die plastische Bearbeitung (S5) mindestens eines der folgenden Verfahren umfasst:

Kaltwalzen, Walzbearbeitung, Brünieren oder Kugelstrahlen.

6. Laufring (1, 5) für ein Lager nach einem der Ansprüche 1 bis 5, ferner umfassend einen Dichtungsabschnitt (3), der in Kontakt mit einem Dichtungselement (9) gehalten wird oder sich in dessen Nähe befindet, wobei der Dichtungsabschnitt (3) gebildet ist, indem das gesinterte Metallmaterial der plastischen Bearbeitung (S5) unterzogen wird.

7. Ein Wälzlager, umfassend:

einen Außenring (1) mit einer äußeren Lauffläche (2) an einem Innenumfang;
einen Innenring (5) mit einer inneren Lauffläche (6) an einem Außenumfang
eine Vielzahl von Wälzkörpern (4), die zwischen der äußeren Lauffläche (6) und der inneren Lauffläche (2) angeordnet sind; und
einen Käfig (8), der so gestaltet ist, dass er die Wälzkörper (4) hält,

wobei der Laufring (1, 5) für ein Lager nach einem der Ansprüche 1 bis 6 als mindestens einer oder beide, der Außenring (1) und der Innenring (5), verwendet wird.

## Revendications

1. Bague de chemin de roulement (1, 5) pour un palier, comprenant une surface de chemin de roulement (2, 6) sur laquelle roule un élément de roulement (4), la surface de chemin de roulement (2, 6) étant formée en soumettant un matériau métallique fritté (15') à un travail plastique (S5),

dans laquelle le matériau métallique fritté (15') est formé en soumettant de la poudre d'acier partiellement alliée par diffusion à base de Fe-Ni-Mo à un moulage par compression (S2), suivi d'un frittage (S4), la poudre d'acier partiellement alliée par diffusion étant constituée de 0,5 % en poids à 5 % en poids de Ni et de 0,5 % en poids à 3 % en poids de Mo, et d'un reste de Fe et d'impuretés inévitables, la poudre d'acier partiellement alliée par diffusion étant de la poudre dans laquelle du Ni est diffusé et relié à une périphérie d'un alliage Fe-Mo, et
avec au moins un volume de risque étant adopté comme volume de prédiction, une racine carrée $\sqrt{area}_{max}$ d'une zone d'enveloppe de pore maximale estimée par l'utilisation de statistiques extrémaux à présenter dans le volume de prédiction étant inférieure à 50 $\mu$m,
le volume de risque = (diamètre long d'ellipse de contact) x (longueur circonférentielle de la surface de chemin de roulement) x (profondeur à laquelle 90 % de contrainte de cisaillement maximale est appliquée),
la racine carrée $\sqrt{area}_{max}$ de la zone d'enveloppe de pore maximale estimée étant obtenue par les étapes (1) à (12) suivantes décrites ci-dessous :

(1) observation d'une pièce d'essai soumise à un polissage miroir avec un microscope,

(2) obtention d'une image ayant une zone de référence $S_0$ prédéterminée ($mm^2$),

(3) numérisation de l'image obtenue par l'utilisation d'un logiciel d'analyse d'image, pour analyser ainsi la zone d'enveloppe d'un pore,

(4) définition de la plus grande zone d'enveloppe parmi les zones d'enveloppe obtenues comme zone d'enveloppe de pore maximale dans la zone de référence $S_0$, et définition d'une racine carrée de celle-ci comme $\sqrt{area}_{max}$ dans cette région,

(5) répétition de cette mesure n fois en changeant de zones d'inspection,

(6) agencement des n pièces mesurées de $\sqrt{area}_{max}$ dans l'ordre croissant, et définition de chacune comme $\sqrt{area}_{max,j}$ (j = 1 à n),

(7) calcul d'une fonction de distribution cumulative $F_j(\%)$ représentée par

Expression (14) et d'une variable normalisée $y_j$ représentée par Expression (15), concernant chaque j (j = 1 à n),

$$F_j = \frac{j}{n+1} \times 100 \qquad \text{(Expression 14)}$$

$$y_j = -\ln\left(-\ln\frac{j}{n+1}\right) \qquad \text{(Expression 15)}$$

(8) mise en place de $\sqrt{area}_{max}$ sur un axe horizontal de coordonnées d'une feuille de probabilité extrémale, et traçage des résultats mentionnés ci-dessus pour obtenir une distribution extrémale en prenant F ou y sur un axe vertical de la feuille de probabilité extrémale,

(9) extrapolation d'une ligne droite approximée par un procédé des moindres carrés en la distribution extrémale, pour obtenir ainsi a et b représentés par Expression (16) (« y » représentant une variable normalisée représentée par Expression (17), « T » représentant une période de récurrence représentée par Expression (18), « V » représentant un volume ($mm^3$) d'une région cible d'estimation, « Vo » représentant un volume de référence ($mm^3$) représenté par Expression (19), et « h » représentant une valeur moyenne (mm) de $\sqrt{area}_{max,j}$ mesurée représentée par Expression (20)),

$$\sqrt{area}_{max} = a \times y + b \qquad \text{(Expression 16)}$$

$$y = -\ln\left(-\ln\frac{T-1}{T}\right) \qquad \text{(Expression 17)}$$

$$T = \frac{V + V_0}{V_0} \qquad \text{(Expression 18)}$$

$$V_0 = S_0 \times h \qquad \text{(Expression 19)}$$

$$h = \sum \sqrt{area}_{max,j} \, / \, n \qquad \text{(Expression 20)}$$

(10) démonstration selon laquelle des points tracés dans 10 % à 85 % d'une échelle F qui est l'axe vertical de la feuille de probabilité extrémale sont placés sur une ligne droite approximée, vérifiant ainsi le fait que la distribution extrémale obtenue suit une distribution double exponentielle,

(11) substitution du volume V de la région cible d'estimation en Expression (18),

(12) obtention d'un point où la période de récurrence T et la distribution extrémale obtenue se coupent l'une avec l'autre en tant que racine carrée $\sqrt{area}_{max}$ de la zone d'enveloppe de pore maximale estimée.

2. Bague de chemin de roulement (1, 5) pour un palier, comprenant une surface de chemin de roulement (2, 6) sur laquelle roule un élément de roulement (4), la surface de chemin de roulement (2, 6) étant formée en soumettant un matériau métallique fritté (15') à un travail plastique (S5),

dans laquelle le matériau métallique fritté (15') est formé en soumettant de la poudre d'acier partiellement alliée par diffusion à base de Fe-Ni-Mo à un moulage par compression (S2), suivi d'un frittage (S4), la poudre d'acier partiellement alliée par diffusion étant constituée de 0,5 % en poids à 5 % en poids de Ni et de 0,5 % en poids à 3 % en poids de Mo, et d'un reste de Fe et d'impuretés inévitables, la poudre d'acier partiellement alliée par diffusion étant de la poudre dans laquelle du Ni est diffusé et relié à une périphérie d'un alliage Fe-Mo, et avec une région s'étendant jusqu'à une profondeur à laquelle une contrainte de cisaillement maximale est appliquée dans une plage d'une largeur axiale d'une ellipse de contact (E) générée sur la surface de chemin de roulement (2, 6) étant adoptée comme volume de prédiction, une racine carrée $\sqrt{area}_{max}$ d'une zone d'enveloppe de pore maximale estimée par l'utilisation de statistiques extrémaux à présenter dans le volume de prédiction étant inférieure à 50 μm,

la racine carrée $\sqrt{area}_{max}$ de la zone d'enveloppe de pore maximale estimée étant obtenue par les étapes (1) à (12) suivantes décrites ci-dessous :

(1) observation d'une pièce d'essai soumise à un polissage miroir avec un microscope,

(2) obtention d'une image ayant une zone de référence $S_0$ prédéterminée (mm²),

(3) numérisation de l'image obtenue par l'utilisation d'un logiciel d'analyse d'image, pour analyser ainsi la zone d'enveloppe d'un pore,

(4) définition de la plus grande zone d'enveloppe parmi les zones d'enveloppe obtenues comme zone d'enveloppe de pore maximale dans la zone de référence $S_0$, et définition d'une racine carrée de celle-ci comme $\sqrt{area}_{max}$ dans cette région,

(5) répétition de cette mesure n fois en changeant de zones d'inspection,

(6) agencement des n pièces mesurées de $\sqrt{area}_{max}$ dans l'ordre croissant, et définition de chacune comme $\sqrt{area}_{max,j}$ (j = 1 à n),

(7) calcul d'une fonction de distribution cumulative $F_j$(%) représentée par Expression (14) et d'une variable normalisée $y_j$ représentée par Expression (15), concernant chaque j (j = 1 à n),

$$F_j = \frac{j}{n+1} \times 100 \qquad \text{(Expression 14)}$$

$$y_j = -\ln\left(-\ln\frac{j}{n+1}\right) \qquad \text{(Expression 15)}$$

(8) mise en place de $\sqrt{area}_{max}$ sur un axe horizontal de coordonnées d'une feuille de probabilité extrémale, et traçage des résultats mentionnés ci-dessus pour obtenir une distribution extrémale en prenant F ou y sur un axe vertical de la feuille de probabilité extrémale,

(9) extrapolation d'une ligne droite approximée par un procédé de moindres carrés en la distribution extrémale, pour obtenir ainsi a et b représentés par Expression (16) (« y » représentant une variable normalisée représentée par Expression (17), « T » représentant une période de récurrence représentée par Expression (18), « V » représentant un volume (mm³) d'une région cible d'estimation, « Vo » représentant un volume de référence (mm³) représenté par Expression (19), et « h » représentant une valeur moyenne (mm) de $\sqrt{area}_{max,j}$ mesurée représentée par Expression (20)),

$$\sqrt{area}_{\max} = a \times y + b \qquad \text{(Expression 16)}$$

$$y = -\ln\left(-\ln\frac{T-1}{T}\right) \qquad \text{(Expression 17)}$$

$$T = \frac{V + V_0}{V_0} \qquad \text{(Expression 18)}$$

$$V_0 = S_0 \times h \qquad \text{(Expression 19)}$$

$$h = \sum \sqrt{area}_{\max,j} / n \qquad \text{(Expression 20)}$$

(10) démonstration selon laquelle des points tracés dans 10 % à 85 % d'une échelle F qui est l'axe vertical de la feuille de probabilité extrémale sont placés sur une ligne droite approximée, vérifiant ainsi le fait que la distribution extrémale obtenue suit une distribution double exponentielle,
(11) substitution du volume V de la région cible d'estimation en Expression (18),
(12) obtention d'un point où la période de récurrence T et la distribution extrémale obtenue se coupent l'une avec l'autre en tant que racine carrée $\sqrt{area}_{\max}$ de la zone d'enveloppe de pore maximale estimée.

3. Bague de chemin de roulement (1, 5) pour un palier selon la revendication 1 ou 2, dans laquelle la poudre d'acier partiellement alliée par diffusion comprend de la poudre d'acier atomisée à l'eau ou un composant d'alliage lié par diffusion à de la poudre de fer pure.

4. Bague de chemin de roulement (1, 5) pour un palier selon l'une quelconque des revendications 1 à 3, dans laquelle au moins la surface de chemin de roulement (2, 6) est durcie par traitement thermique (S6).

5. Bague de chemin de roulement (1, 5) pour un palier selon l'une quelconque des revendications 1 à 4, dans laquelle le travail plastique (S5) comprend un laminage à froid, et/ou un traitement par rouleau, et/ou un brunissage et/ou un grenaillage.

6. Bague de chemin de roulement (1, 5) pour un palier selon l'une quelconque des revendications 1 à 5, comprenant en outre une partie d'étanchéité (3) qui est maintenue en contact avec un élément d'étanchéité (9) ou est proche de celui-ci, la partie d'étanchéité (3) étant formée en soumettant le matériau métallique fritté au travail plastique (S5).

7. Palier de roulement, comprenant :

une bague extérieure (1) ayant une surface de chemin de roulement extérieure (2) sur une périphérie intérieure ;
une bague intérieure (5) ayant une surface de chemin de roulement intérieure (6) sur une périphérie extérieure ;
une pluralité d'éléments de roulement (4) disposés entre la surface de chemin de roulement extérieure (6) et la surface de chemin de roulement intérieure (2) ; et
une cage (8) conçue pour maintenir les éléments de roulement (4),
dans lequel la bague de chemin de roulement (1, 5) pour un palier selon l'une quelconque des revendications 1 à 6 est utilisée comme la bague extérieure (1) et/ou comme la bague intérieure (5).

Fig. 1a

Fig. 1b

Fig. 2

| RAW MATERIAL POWDER PREPARATION STEP | S1 |
| COMPRESSION MOLDING STEP | S2 |
| DEGREASING STEP | S3 |
| SINTERING STEP | S4 |
| PLASTIC WORKING STEP | S5 |
| HEAT TREATMENT STEP | S6 |
| FINISHING STEP | S7 |

## Fig. 3

## Fig. 4a

## Fig. 4b

Fig. 5

Fig. 6

Fig. 7a

Fig. 7b

Fig. 8a

Fig. 8b

Fig. 9

| | MATERIAL | $\sqrt{area}_{max}$ , $\mu$ m OF DENSIFIED REGION | HEAT TREATMENT | $L_{10}$ LIFE, h | DETERMINATION |
|---|---|---|---|---|---|
| EXAMPLE 1 | Fe–Ni–Mo–C SINTERED MATERIAL | LESS THAN 50 | CARBURIZING, QUENCHING AND TEMPERING | 109 | O |
| COMPARATIVE EXAMPLE 1 | Fe–Cr–Mo–C SINTERED MATERIAL | 50 OR MORE AND LESS THAN 80 | ↑ | 60 | △ |
| COMPARATIVE EXAMPLE 2 | Fe–Ni–Mo–C SINTERED MATERIAL | 80 OR MORE | ↑ | 1H OR LESS | × |
| COMPARATIVE EXAMPLE 3 | SUJ2 INGOT MATERIAL | LESS THAN 50 | THROUGH-HARDENING AND TEMPERING | 126 | O |

Fig. 10

| | DENSITY BEFORE PLASTIC WORKING g/cm$^3$ | SURFACE LAYER PORTION | INNER PORTION |
|---|---|---|---|
| EXAMPLE 1 | 7.5 | | |
| COMPARATIVE EXAMPLE 1 | 6.8 | | |

Fig. 11

Fig. 12

Fig. 13

$\mu=0$

EQUAL STRESS LINE CHART

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2876715 B
- JP 2012533688 A
- JP 2012127492 A
- US 2012180589 A1
- US 2004081576 A1
- US 2013298691 A1